# EUROPEAN PATENT SPECIFICATION

(11) **EP 4 262 413 B1**
(45) Date of publication and mention of the grant of the patent: **17.09.2025**
(21) Application number: 21844213.5
(22) Date of filing: 17.12.2021
(51) Int. Cl.: A23C 3/07, A23L 3/01

(54) **INHIBITION OF PROTEIN AGGLOMERATION**
HEMMUNG DER PROTEINAGGLOMERATION
INHIBITION DE L'AGGLOMÉRATION DE PROTÉINES

(30) Priority: 18.12.2020 GB 202020202
(43) Date of publication of application: 25.10.2023
(73) Proprietor: University College Dublin, Belfield, Dublin 4 (IE)
(72) Inventor: ENGLISH, Niall, Dublin, Dublin 4 (IE)
(74) Representative: FRKelly
(86) International application number: PCT/EP2021/086517
(87) International publication number: WO 2022/129541

(56) References cited:
- JP-A- S62 151 167
- US-A1- 2004 005 242
- FRANCESCA APOLLONIO ET AL: "Mixed Quantum-Classical Methods for Molecular Simulations of Biochemical Reactions With Microwave Fields: The Case Study of Myoglobin", IEEE TRANSACTIONS ON MICROWAVE THEORY AND TECHNIQUES, IEEE, USA, vol. 56, no. 11, 1 November 2008 (2008-11-01), pages 2511 - 2519, XP011236941, ISSN: 0018-9480, DOI: 10.1109/TMTT.2008.2005890
- NUNES LAUANE ET AL: "Thermal treatments and emerging technologies: Impacts on the structure and techno-functional properties of milk proteins", TRENDS IN FOOD SCIENCE AND TECHNOLOGY, vol. 90, 2019, pages 88 - 99, XP085725331, ISSN: 0924-2244, DOI: 10.1016/J.TIFS.2019.06.004

## Description

### TECHNICAL FIELD

This invention relates to the inhibition of protein agglomeration.

### BACKGROUND ART

Protein agglomeration is a major industrial process-engineering problem in a variety of industries, e.g. milk and whey-protein-concentrate solutions in the dairy industry, and therapeutic antibodies in the bio-pharmaceuticals industry to give just two examples. The skilled person will appreciate that protein-containing liquids are used and processed in many other industries also (food and beverage production and processing, enzymes used in chemical processes, and biotechnology generally.

Agglomeration of proteins in, for example, milk or whey frequently results in bio-fouling of plate-and-frame heat exchangers and is a major problem in the dairy industry, with the deposition of agglomerated-protein biofilms on metal surfaces. In the medical arena, protein coagulation is also a major problem in blood processing, with thinning and anti-coagulation agents like warfarin taking their toll on patients vis-à-vis challenging side effects. Similar problems arise in other industries where proteins that are susceptible to agglomeration or coagulation are used.

In the context of milk processing, proteins comprise 26% of total solids content of milk with casein and β-lactoglobin (β -Lg) accounting for 76% and 9%, respectively, of total protein content. The most commonly used heat transfer device is a plate heat exchanger (HE). Tubular HEs are also employed, particularly at higher temperatures, and are more prone to fouling the plate HEs due to lower turbulence leading to higher rates of deposition onto the HE surfaces. Milk is heat-treated to pasteurise it, with different heating regimes employed to produce different products. The heating inherent in pasteurisation leads to fouling, resulting in process down-time due to the requirement for more frequent periodic cleaning of process equipment by Clean-In-Place (CIP) methods, in turn reducing productivity and increasing energy costs and operational expenditure.

Agglomeration may be the result of free-energy minimisation via many-body protein aggregation and 'self-assembly' towards thermodynamically (meta-)stable protein-agglomerated clusters.

To address the problem of unwanted agglomeration, several methods are currently in use, such as: (i) solvent exchange, (ii) glycerol addition, (iii) changing pH, (iii) changing salt concentration, (iv) adding an osmolyte, addition of metal ions, (v) addition of stabilising polymers, (vi) use of a phosphate buffer, and (vii) coating of surfaces to inhibit deposition of agglomerated proteins. The large economic expense and operationally challenging circumstances of removing any added agents post-processing is a substantial and ongoing problem, in addition to potential modification of protein properties by these additives (e.g. taste, purity standards etc. for milk).

Pulsed (static, time-invariant) electric fields [see references 1-10 at the end of the description] have been applied to protein solutions in an effort to control agglomeration properties, although little consensus exists. This unclear picture presents mixed results, other than a typical tendency for static and pulsed electric fields to lead to enhanced agglomeration [11]. Of course, an important goal in food or dairy process-engineering (and in other fields of science) is to reliably and controllably suppress rather than promote this phenomenon.

WO 2010/106296 discloses treating cows milk and whey protein concentrate by applying a low frequency electromagnetic field of 13.7kHz, 20kHz or 28kHz in order to reduce the protein fouling observed in a heat exchanger.

### DISCLOSURE OF THE INVENTION

There is provided a method of method of inhibiting protein agglomeration in a protein-containing liquid, carried out in an industrial processing plant, the method comprising:
providing an industrial processing plant comprising a plurality of liquid processing systems connected in a sequence by conduits, wherein one of said liquid processing systems comprises a microwave resonance cavity having a source of microwaves communicating therewith, and said microwave resonance cavity having an inlet conduit and an outlet conduit, with at least one other of said liquid processing systems being connected to said outlet conduit;
transporting a protein-containing liquid via said inlet conduit into said microwave resonance cavity;
exposing the liquid within said microwave resonance cavity to a microwave electromagnetic field provided by said microwave source and thereby reducing the tendency of proteins within the liquid to agglomerate, wherein the microwave electromagnetic field has an average field strength of between 0.1 kV/m and 20 kV/m;
transporting the liquid, following exposure to said microwave electromagnetic field, via said outlet conduit to said at least one other of said liquid processing systems; and
performing a further industrial processing step on said liquid in said at least one other of said liquid processing systems within a time of one hour after exposure to said microwave electromagnetic field.

It has been found that exposing a protein-containing liquid to a microwave electromagnetic field can induce an anti-agglomerative effect that lasts for a period of time after the exposure. In particular, it has been found that it is possible to induce such a change within a larger industrial process, such that the change persists for sufficient time to allow for a subsequent processing step to take place with reduced agglomeration of protein, and thereby reduce the incidence of fouling, blockages, and so on in the subsequent processing step.

The electric field strength of the microwave field is controlled to avoid significant heating of the liquid, as the goal is not to heat the liquid but rather to induce a decrease in viscosity and a consequential reduced fouling tendency during a later processing step, in particular during a subsequent processing step in which the liquid is heated and where fouling due to agglomeration would be expected to occur to a greater extent in the absence of the microwave treatment.

Without being bound to any theory, it is believed that the field-reversal frequency observed in microwave fields (wherein the electric- and magnetic-field components change direction continuously, back and forth for each sinusoidal field cycle) can be tailored to overlap with fundamental oscillatory translational and rotational modes in proteins. This is an example of bio-mechanical 'resonance' - which usurps and subverts proteins' propensity to agglomerate by undermining the energy-relaxation or "self-assembly" processes. In effect, the resonant energy transfer may enhance the amplitude of natural "wiggling" and "jiggling" protein motions, discouraging their assembly together in an ordered coagulated or agglomerated arrangement - assisting entropy's 'guiding hand'.

In addition, these microwave-based protein-disaggregation methods can be used to suppress and disaggregate existing agglomerates.

The method is energy efficient, and highly adaptable to industrial processing for a number of reasons: it provides the ability to retrofit and increase the capacity of existing footprint-constrained plant/heat exchangers; it is readily amenable to scale-up and continuous-mode flow operation; it can be provided using a portable apparatus, providing ease of shipping equipment (e.g., skid-mounted) for process-pipe 'plug-in'; it is an additive and contact-free method, which is especially important for regulatory approval in the biopharma industry and for consumer acceptability in the food and drink industries; it is naturally reversible, in that the anti-agglomeration effects relax slowly upon field removal and ultimately dissipate; it has no adverse effects in protein function.

Preferably, said microwave electromagnetic field has an average field strength of at least 0.25 kV/m.

Further preferably, said microwave electromagnetic field has an average field strength of at least 0.4 kV/m.

Preferably, said microwave electromagnetic field has an average field strength of no more than 10 kV/m.

More preferably, said microwave electromagnetic field has an average field strength of no more than 5 kV/m.

Further preferably, said microwave electromagnetic field has an average field strength of between 0.5 kV/m and 5 kV/m.

References to average field strengths herein relate to the root mean square (r.m.s.) field intensity during the "On" part of any duty cycle, averaged across the volume within which the liquid is exposed to the field.

Preferably, the liquid is exposed to the microwave electromagnetic field for at least one minute, during which the microwave electromagnetic field provided as a pulsed or continuous field.

Preferably, the microwave electromagnetic field is provided as a pulsed field, with a duty cycle ratio of on time to off time of from 1:800 to 1:1.

Providing a pulsed field reduces the overall energy delivered to the liquid, as one would expect. Surprisingly, however, it has been found that even with off times which are orders of magnitude longer than the on times, the effect of the microwave treatment is maintained with very little reduction in effect. For example, off times which are 200 to 500 times longer than the on times have been found to result in similar reductions in effect on agglomeration (compared to continuous microwave fields) while drastically reducing the amount of heating of the liquid during the microwave processing step for a given duration of treatment, and reducing the energy consumption of the treatment process.

Preferably, the duty cycle ratio has an on time to off time of from 1:600 to 1:100.

In preferred embodiments, the microwave electromagnetic field is provided as a pulsed field with a duty cycle of an on time between 0.1 and 10 microseconds and an off time between 10 and 80 microseconds.

The microwave electromagnetic field is provided as a pulsed field with a duty cycle of an on time between 0.1 and 1 microseconds and an off time between 20 and 80 microseconds. Preferably, the microwave electromagnetic field has a frequency of between 0.1 and 30 GHz,. More preferably, the microwave electromagnetic field has a frequency of between 0.25 and 10 GHz.

In particularly preferred embodiments, the microwave electromagnetic field has a frequency of between 0.5 and 5 GHz.

It is preferred to tailor the frequency to a resonant frequency of the protein-containing liquid, that is a frequency which is observed to exhibit an increased anti-agglomeration tendency.

Preferably, the method further comprises the step of thermostatically controlling the exposure of the liquid to the microwave electromagnetic field, and thereby preventing the liquid from being heated above a predetermined temperature.

The predetermined temperature below which the liquid should remain will depend on the protein in the liquid, since different proteins will be affected differently at different temperatures. However, preferably said predetermined temperature is less than 60°C, more preferably less than 50°C, 40°C or 30°C.

In certain embodiments, the inlet conduit and the outlet conduit are the same conduit.

In some embodiments, the liquid is exposed to said microwave electromagnetic field in a batched operation.

In other embodiments, the liquid is exposed to said microwave electromagnetic field in a continuous flow mode of operation wherein the liquid flows through said cavity at a volumetric rate that provides a predetermined level or range of exposure to said microwave electromagnetic field.

Preferably, said liquid is an aqueous liquid.

The method has particular application wherein said liquid is milk or a derivative thereof.

In many embodiments of interest, said further industrial processing step comprises heating said liquid to a temperature higher than the maximum temperature reached during the exposure of the liquid to said microwave electromagnetic field.

Preferably, said further industrial processing step comprises passing said liquid through a heat exchanger to perform said heating of said liquid.

As the skilled person will be aware, the fouling problem is frequently most pronounced when a protein-containing liquid is passed through a heat exchanger. By performing the microwave processing step (with minimal heating) and then, within a predetermined time while the effect of agglomeration reduction is still evident, performing the required heat exchanger step, fouling is reduced.

In preferred embodiments, said further industrial processing step heats said liquid to a temperature of greater than 70°C, and the maximum temperature reached during exposure of the liquid to said microwave electromagnetic field is no greater than 60°C, more preferably 50°C, more preferably 40°C, more preferably 30°C.

Preferably, said heating step is performed within a time of 30 minutes after exposure to said microwave electromagnetic field, more preferably 20 minutes, more preferably 10 minutes.

In a preferred embodiment the method further comprises, prior to the step of exposing the liquid within said microwave resonance cavity to a microwave electromagnetic field: performing a molecular dynamic simulation to determine the effect of different microwave frequencies on inter-molecular spacing between molecules of a protein found in said liquid; and determining from said simulation an effective frequency to increase said inter-molecular spacing; and wherein said step of exposing the liquid within said microwave resonance cavity to a microwave electromagnetic field employs a microwave electromagnetic field having a frequency determined to be effective in said simulation.

In this way, the microwave treatment can be tailored towards the resonant frequencies that are found, in the simulation, to have a significant effect on inter-molecular distances, and a consequent reduction in agglomeration for a window of time following the treatment.

Preferably, said step of determining an effective frequency identifies a frequency or range of frequencies for which said inter-molecular spacing is increased beyond a minimum level relative to a zero-field equilibrium spacing for said protein.

More preferably, said identified frequency or range of frequencies maximises said inter-molecular spacing.

There is also provided an assembly of an industrial processing plant comprising:
a plurality of liquid processing systems connected in a sequence by conduits, wherein one of said liquid processing systems comprises a microwave resonance cavity having a source of microwaves communicating therewith, and said microwave resonance cavity having an inlet conduit and an outlet conduit, with at least one other of said liquid processing systems being connected to said outlet conduit;
flow control means for controlling the flow of a protein-containing liquid via said inlet conduit into said microwave resonance cavity;
a microwave controller for controlling the exposure of liquid within said microwave resonance cavity to a microwave electromagnetic field provided by said microwave source and thereby reducing the tendency of proteins within the liquid to agglomerate wherein the controller is configured to provide a microwave electromagnetic field with an average field strength of between 0.1 kV/m and 20 kV/m and a frequency of between 0.1 and 30GHz;
flow control means for controlling the flow of the liquid, following exposure to said microwave electromagnetic field, via said outlet conduit to said at least one other of said liquid processing systems; and
a process controller operative to perform a further industrial processing step on said liquid in said at least one other of said liquid processing systems within a time of one hour after exposure to said microwave electromagnetic field.

### BRIEF DESCRIPTION OF THE DRAWINGS

Fig 1 is a graph showing the average of the protein-protein centre-of-mass spacings for four β-lactoglobulin proteins in non-equilibrium molecular-dynamics NEMD simulations for different microwave fields;
Fig. 2 is a schematic diagram of a pasteurisation plant; and
Fig. 3 is a partial cut-away view of a microwave treatment unit for the plant of Fig. 2.

### DETAILED DESCRIPTION OF PREFERRED EMBODIMENTS

NEMD simulations were run for four β-lactoglobulin proteins in a large simulation box of water on all-atom basis, using the CHARMM and SPC/E potential models [3], under zero-field conditions and also in 2.45 and 100 GHz microwave fields. The root-mean square (r.m.s.) microwave field intensity range was 0.005 to 0.05 V/Å; the former level is around the dielectric-saturation threshold of liquid water and aqueous phases, whilst the latter abuts a linear-to-non-linear field-response transition [1]. For each field condition, we performed two independent simulations with Maxwell-Boltzmann velocity randomisation, so as to average over each for increased statistical certainty (and observe reproducibility).

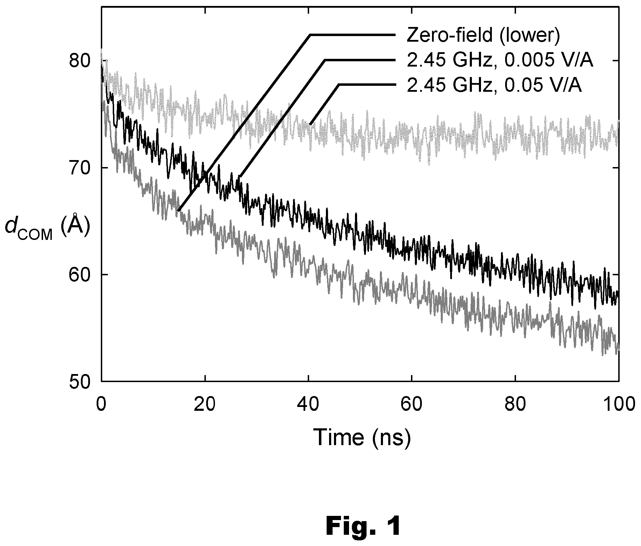

Shown in Fig. 1 is the time evolution of the six (pairwise) centre-of-mass (COM) spacings between the four proteins under varying field conditions. This shows the suppression of agglomeration in the microwave fields, which happens naturally in the absence of an applied field. 2.45 GHz was found to be more effective than 100 GHz, and it was found that field removal led to a similar eventual spacing as in the zero-field case (i.e., reversibility of the microwave field anti-agglomeration effect).

Upon microwave field removal, the spacings reverted back to the zero-field level, with no substantial change in protein geometry and configurations. Naturally, this reversibility upon field removal is a very important desideratum for industrial anti-agglomeration and subsequent post-processing retaining of desired physico-chemical and rheological/taste properties.

It can be seen form Fig. 1 that the most effective simulation, i.e. that which achieved maximum COM spacing, was the 2.45 GHz field applied with a field intensity of 0.05 V/Å. It can also be seen that this field achieved a steady state after a short time, where the COM spacing remained relatively constant.

Following on from the simulations of Fig. 1, further simulations were carried out to investigate the effect of frequency, for these proteins, by looking at the COM spacing achieved for different frequencies in 0.05 V/Å fields once a steady state was observed. The results are seen in Table 1 below, and it can be seen that the maximal spacing is achieved at 2.45 GHz.

**Table 1**

| **Frequency (GHz)** | **COM spacing (10⁻¹⁰m)** |
|---|---|
| 0.5 | 54.7 ± 0.94 |
| 1 | 59.5 ± 1.07 |
| 2.45 | 72.5 ± 0.92 |
| 10 | 60.6 ± 0.91 |
| 20 | 57.4 ± 1.02 |
| 50 | 55.3 ± 0.87 |
| 100 | 54.2 ± 0.85 |

The proteins simulated in Fig. 1 and Table 1 are important proteins for dairy processing. To investigate the effectiveness of microwave treatment to reduce protein agglomeration for those proteins typically encountered in biopharmaceutical broths, further NEMD simulations were carried out on four EG2-hFc proteins, which are chimeric heavy-chained monoclonal antibodies expressed by Chinese-Hamster Ovary (CHO) cell cultures. By varying the EMF frequency from 1 to 2.45 and up to 100 GHz, with r.m.s. field strength of 0.05 V/Å, it was found that 1 GHz was the more effective frequency for increasing COM spacings. This different result is not unexpected from a bio-mechanics perspective, given the larger size/mass of 80 kDa for this protein versus approximately 18.5 kDa for β-lactoglobulin, its larger moment of inertia, and its lower-frequency 'native' translation/rotation-oscillation modes.

A larger-system NEMD simulation of eight EG2-hFc proteins, i.e. at double the concentration (akin to 4 and 10%-fat milk for DLS) show that there is a more pronounced disaggregating effect than for the lower-concentration case, which was also observed for milk.

Further simulations of four EG2-hFc proteins at 0.5, 1, 2.45, 10, 20, 50 & 100 GHz confirmed that 1 GHz is the most effective deagglomerative frequency in this case (see Table 2).

**Table 2**

| **Frequency (GHz)** | **COM spacing (10⁻¹⁰m)** |
|---|---|
| 0.5 | 93.2 ± 1.52 |
| 1 | 108.2 ± 1.70 |
| 2.45 | 101.2 ± 1.64 |
| 10 | 81.7 ± 1.42 |
| 20 | 78.2 ± 1.37 |
| 50 | 72.7 ± 1.39 |
| 100 | 70.6 ± 1.28 |

NEMD simulations demonstrate the proof of concept and the theoretical basis for the underlying phenomenon. In such simulations a pulse of tens of nanoseconds shows a tangible effect in inter-molecular distances, when very high field strengths are applied for those very short pulses. However, for practical applications, lower field strengths are used for longer periods.

Further simulations were performed on different proteins to identify the frequency at which the maximum anti-agglomeration effect was observed, the results being as follows:

**Table 3**

| **Protein species** | **Frequency** |
|---|---|
| Thrombin | 5 GHz |
| Factor VIII | 1 GHz |
| Factor XIII | 2.45 GHz |
| BSA | 10 GHz |
| Alpha-lacto-globulin | 2.45 GHz |
| Immuno-globulin | 1 GHz |
| Catumaxomab | 0.5 GHz |

The identified frequencies are not guaranteed to provide the absolute maximum of effect; rather they are the optimum frequencies from a number of candidate frequencies for which simulations were run for each protein. Nevertheless, by determining the frequency providing maximum effect from a range of candidate frequencies, the microwave treatment process can be significantly improved by being tailored to the species of interest in the liquid.

In the above NEMD, the general trend is that larger proteins typically have lower resonant frequencies, owing to their larger translational and rotational inertia. However, other factors, such as backbone stability and hydrogen-bond lifetimes, particular to secondary structure *per se*, were also seen to have second-order importance.

### Example 1

The viscosity of whole-fat retail milk (approximately 4% fat), was measured at about 1.85 cP at 20°C, unaffected by exposure to e/m fields, using a Malvern Zetasizer Ultra. This apparatus uses Dynamic Light Scattering (DLS) to measure viscosity as described in refs. 13-17. In brief, one extracts the particle (protein) mean-squared displacement from DLS within Stokes-Einstein continuum theory, describing also the auto-correlation function (ACF) of the time-domain light-scattering signal. From frequency-domain (Fourier) analysis, one then extracts from the ACF by fitting to their real-/imaginary-space analogues the micro-rheological Stokes-Einstein properties, including the frequency-dependent (complex) viscosity - and, thence, the viscosity *per se.*

50 ml virgin milk samples were placed in a small-scale microwave field exposure cell at 2.45 GHz and E = 2 kV/m for 10 mins in a steady state. There was no physical contact with the electrodes generating the microwave field. The samples were then placed immediately in the DLS. Within about one minute of DLS probing, the viscosity was measured at 1.27 +/- 0.19 cP, i.e. a reduction in viscosity of close to one-third.

Measuring every 5 minutes thereafter DLS, it took of the order of 15-20 mins to reach 90-95% of the original viscosity i.e. 1.85 cP.

Given the importance of undesired agglomeration of casein and β-lactoglobulin proteins, which cause biofilm clogging of heat exchangers and which are a primary culprit of problems in the production, respectively, of powdered and liquid milk - this reversible control over, and manipulation of, protein-solution viscosity is very important. Simply put, a one-third reduction in viscosity (suggested by preliminary experiments) would increase flow by a third, and lead to operational expenditure falling by close to that fraction.

The same experiment was repeated using a pulsed microwave field, for 10 minutes, with a duty cycle (on time : off time) of 1:200. The viscosity-reduction performance was again observed, with an efficacy of approximately 70% compared to the reduction in viscosity found in the steady state (reduction to approximately 1.45 cP). Thus, with only 0.5% of the energy input to the system, it was still possible to achieve an impressive reduction in the viscosity of the liquid, with similar duration of effect, i.e. 15-20 minutes), resulting in a very significant energy saving and reduction in the energy absorbed by the liquid.

### Example 2

A natural question arises as to whether this technology is effective for more concentrated dairy-protein solutions (with intermediate, pre-Pasteurisation milk-process fluids at about 40-45% solids). Bearing this in mind, we also carried out two experiments using 'heavier' (approximately 10%-solids) milk obtained from gentle heating.

Using the same set-up as Example 1, these experiments showed about 36% and 37% reductions respectively in viscosity by the same EMF-exposure strategy, with reversibility time lasting about 30 minutes for 95% re-establishment of the pre-exposure viscosity. Again when repeated with a 1:200 pulse train the reduction was observed at about 70% of the steady-state case.

Therefore, both the extent of the EMF-based viscosity-reduction effect and reversibility timescale have been found to be increased for more concentrated solutions.

Given that process-fluid residence times in dairy-processing heat exchangers and membranes are usually less than 5-10 minutes, this method will be effective for temporary protein-coagulation and viscosity suppression and control.

It is important to note that there is already a degree of natural (thermodynamically metastable) colloidal suspension in milk, reflecting partially-agglomerated β-lactoglobulin clusters. The fact that partial, time-reversible EMF-mediated disaggregation was observed via the direct proxy measure of viscosity signals *prima facie* demonstrates that this technology is not only effective in inhibiting protein agglomeration from the outset, but also in reducing this after coagulation or agglomeration has occurred naturally. This opens up designing and implementing industrial, rheology-monitoring strategies in-line for real-time EMF-based process control.

### Example 3

Experimentally, solvated BSA and thrombin (at around 1.4-1.7 wt %) underwent DLS viscosity-determination after 2.45 GHz exposure, in an identical manner to Examples 1 and 2, and there were averaged 23 and 18% reductions in viscosity - still appreciable given the slightly lower concentration than in full-fat dairy milk tested in the previous examples.

Accordingly, it can be seen that the methods disclosed herein are applicable beyond the dairy industry and into all areas where protein-containing liquids are industrially processed, In particular for processing biological liquids and in the biopharma industry.

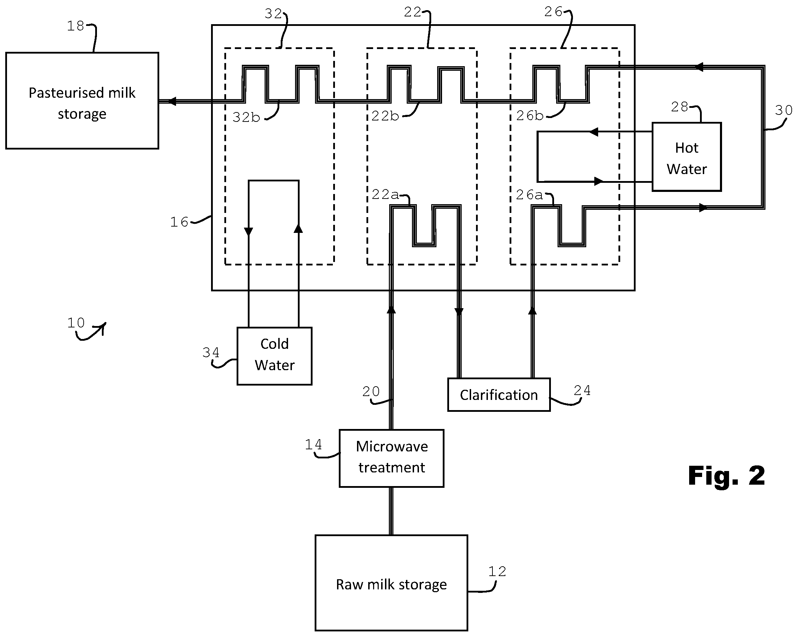

Fig. 2 is a schematic diagram in which a pasteurisation plant is indicated generally at 10. Raw milk is transported from raw milk storage successively through a microwave treatment unit 14, described in further detail below, then through a plate heat exchanger 16 to undergo pasteurisation, and into a pasteurised milk storage tank 18 for further processing or filling. A heavy line, indicated at 20, denotes the path of the milk product through the plant 10.

In the plate heat exchanger 16, the milk passes successively though a number of heat exchanger stages. It first enters a pre-heating and pre-cooling exchanger 22, in which heat is transferred into the milk in section 22a from the milk in section 22b. The pre-heated milk from section 22a enters a clarification unit 24 to remove particles from the milk. At this point the milk could also be centrifuged to separate different fractions and alter the fat content.

The milk then enters the heating stage 26, which is heated by hot water (or steam) circulated from a hot water supply 28. The heated milk passes through a holding coil 30 to ensure sufficient residence time at the required temperature to achieve pasteurisation, before re-entering stage 26 where in section 26b it continues to be heated by the hot water supply 28.

From section 26b the milk passes into section 22b, where it is cooled by transfer of heat to section 22a as previously noted. Then it enters the main cooling stage 32 where, in section 32b, it is cooled by heat transfer with refrigerated water circulated from a cold water supply 34. The cooled and pasteurised milk is then transferred into the pasteurised milk storage 18.

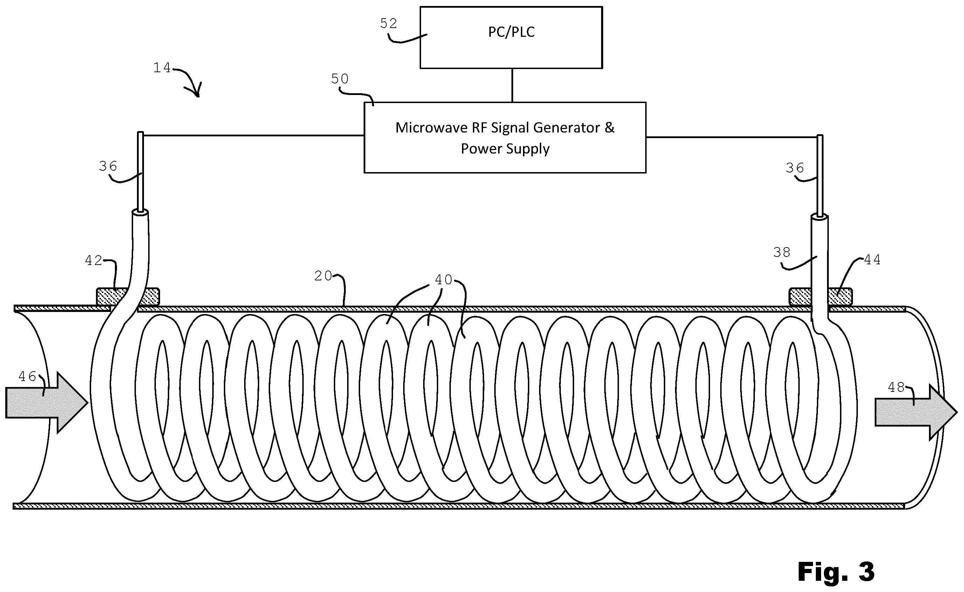

Referring to Fig. 3, the microwave treatment 14 is shown in more detail. This unit uses a section of the milk pipeline 20 as a microwave resonance cavity in order to expose the milk to a microwave electromagnetic field as the milk is transported between an inlet conduit 46 and an outlet conduit 48.

Microwave-frequency alternative current is carried in a conductor or waveguide 36 which is sheathed with an insulating sheath 38, and takes the form of an elongated coil 40 within the walls of the pipeline 20 (shown in partial cut-away). The coil's entry and exit from the pipeline are sealed by a pair of respective gaskets 42, 44, to prevent leakage or contamination of the milk.

A microwave frequency electromagnetic field is generated within the pipeline by this coil 40, and the milk passing through the section of pipeline is thereby exposed to a field of a desired field strength for a desired period of time (determined by the flow rate and residence time within the cavity formed by this section of pipeline 20).

The microwave-frequency current in the conductor or waveguide 36 is generated by a microwave RF signal generator and power supply 50 under the control of a computer or programmable logic controller denoted as PC/PLC 52. This controller can determine the frequency, intensity, duty cycle, and other characteristics of the microwave field to which the milk is exposed, and is typically integrated with the overall plant control, e.g. to ensure that these characteristics are tailored to the composition of the milk and the flow rate.

As described previously and as demonstrated by the experimental data herein, this exposure inhibits protein agglomeration in the milk for an extended period of time, which is sufficient for the milk to pass fully through the plate heat exchanger 16 of Fig. 2 and thereby inhibits coagulation and deposition of protein on the surfaces of the heat exchanger 16, the pipeline 20, clarification unit 24, and the holding coil 30.

It will be appreciated that while the invention has been illustrated in Figs. 2 and 3 using a pasteurisation plant for treatment of milk, the microwave treatment can be integrated into many other industrial processes for processing protein-containing liquids. The benefits of anti-agglomeration and inhibition of protein coagulation and deposition are equally beneficial in other processes. It will also be appreciated that the form of microwave treatment unit can be varied widely within the limits of the skilled person's knowledge, with different microwave treatment cavities and generators being used. The product is shown passing through a continuous pipeline but it could equally be carried out in a batched mode, or in tank with a continuous or batched flow.

### References

1. N.J. English, and C.J. Waldron, Perspectives on External Electric Fields in Molecular Simulation: Progress, Prospects and Challenges, PhysChemChemPhys 17, 12407-12440 (2015)
2. N.J. English and D.A. Mooney, Denaturation of hen egg white lysozyme in electromagnetic fields: a molecular dynamics study, J. Chem. Phys., 126(9), 091105 (2007).
3. N.J. English, G.Y. Solomentsev and P. O'Brien, Non-equilibrium molecular dynamics study of electric and low-frequency microwave fields on hen egg white lysozyme, J. Chem. Phys., 131, 035106 (2009).
4. G.Y. Solomentsev, N.J. English & D.A. Mooney, Hydrogen bond perturbation in hen egg white lysozyme by external electromagnetic fields: non-equilibrium molecular dynamics study, J. Chem. Phys., 133, 235102 (2010).
5. J.-A. Garate, N.J. English and J.M.D. MacElroy, Human aquaporin 4 gating in DC/AC electric fields: a molecular dynamics study, J. Chem. Phys. 136, 055110 (2011).
6. G.Y. Solomentsev, N.J. English and D.A. Mooney, Effects of external electromagnetic fields on the conformational sampling of a short alanine peptide, J. Comp. Chem., 33(9), 917-923 (2012)
7. N. Todorova, A. Bentvelzen, N.J. English and I. Yarovsky, Electromagnetic-field effects on amyloidogenic peptides' structure & dynamics, J. Chem. Phys.144, 085101 (2016)
8. P. Marracino, M. Liberti, E. Trapani, C.J. Burnham, M. Avena, J.-A. Garate, F. Apollonio and N.J. English, Human Aquaporin 4 Gating Dynamics Under Perpendicularly-Oriented Electric-Field Impulses: A Molecular Dynamics Study, Inter. J. Molec. Science, 17, 1133 (2016)
9. N.J. English and J.-A. Garate, Near-Microsecond Human Aquaporin 4 Gating Dynamics in Static and Alternating External Electric Fields: Non-Equilibrium Molecular Dynamics, J. Chem. Phys. 145, 085102
10. C.J. Burnham and N.J. English, Electro-pumping of Water through Human Aquaporin 4 by Circularly-Polarised Electric Fields: Dramatic Enhancement and Control Revealed by Non-Equilibrium Molecular Dynamics, J. Phys. Chem. Lett. 8, 4646-4651 (2017)
11. Wu L, Zhao W, Yang R, Yan W, Sun Q, Aggregation of egg white proteins with pulsed electric fields and thermal processes, J Sci Food Agric. 96, 3334 (2016)
12. A. Rojey, Method for Electromagnetic Fields to Suppress Clathrate-Hydrate Formation in Pipelines, U.S. Patent No. 5625178 (1997).
13. Mason TG, Weitz DA, 1995, Optical measurements of frequency-dependent linear viscoelastic moduli of complex fluids. Phys. Rev. Lett. 74: 1250-1253
14. Mason TG, 2000, Estimating the viscoelastic moduli of complex fluids using the generalized Stokes-Einstein equation. Rheol. Acta 39: 371-378
15. Dasgupta BR, Tee S-Y, Crocker JC, Frisken BJ, Weitz DA, 2002, Microrheology of polyethylene oxide using diffusing wave spectroscopy and single scattering. Phys. Rev. E 65:051505
16. Lu Q, Solomon MJ, 2002, Probe size effects on the microrheology of associating polymer solutions. Phys. Rev. E 66:061504
17. Amin S, Rega CA, Jankevics H, 2012, detection of viscoelasticity in aggregating dilute protein solutions through dynamic light scattering-based optical microrheology. Rheol. Acta 51: 329-342
18. R. Reale, N.J. English, J.-A. Garate, P. Marracino, M. Liberti and F. Apollonio, Human Aquaporin 4 Gating Dynamics Under Electric-Field Impulses: A Molecular Dynamics Study of Field Effects and Relaxation, J. Chem. Phys. 139(20), 205101 (2013)

## Claims

1. A method of inhibiting protein agglomeration in a protein-containing liquid, carried out in an industrial processing plant, the method comprising:
providing an industrial processing plant comprising a plurality of liquid processing systems connected in a sequence by conduits, wherein one of said liquid processing systems comprises a microwave-resonance cavity having a source of microwaves communicating therewith, and said microwave-resonance cavity having an inlet conduit and an outlet conduit, with at least one other of said liquid processing systems being connected to said outlet conduit;
transporting a protein-containing liquid via said inlet conduit into said microwave resonance cavity;
exposing the liquid within said microwave-resonance cavity to a microwave electromagnetic field provided by said microwave source and thereby reducing the tendency of proteins within the liquid to agglomerate, wherein the microwave electromagnetic field has an average field strength of between 0.1 kV/m and 20 kV/m, and wherein the microwave electromagnetic field has a frequency of between 0.1 and 30 GHz;
transporting the liquid, following exposure to said microwave electromagnetic field, via said outlet conduit to said at least one other of said liquid processing systems; and
performing a further industrial processing step on said liquid in said at least one other of said liquid processing systems within a time of one hour after exposure to said microwave electromagnetic field.

2. The method of claim 1, wherein said microwave electromagnetic field has an average field strength of at least 0.25 kV/m; or
wherein said microwave electromagnetic field has an average field strength of at least 0.4 kV/m.

3. The method of claim 1 or claim 2, wherein said microwave electromagnetic field has an average field strength of no more than 10 kV/m; or
wherein said microwave electromagnetic field has an average field strength of no more than 5 kV/m; or
wherein said microwave electromagnetic field has an average field strength of between 0.5 kV/m and 5 kV/m.

4. A method according to any preceding claim, wherein the liquid is exposed to the microwave electromagnetic field for at least one minute, during which the microwave electromagnetic field provided as a pulsed or continuous field.

5. A method according to claim 4, wherein the microwave electromagnetic field is provided as a pulsed field, with a duty cycle ratio of on-time to off-time of from 1:800 to 1:1 or from 1:600 to 1:100.

6. A method according to claim 4, wherein the microwave electromagnetic field is provided as a pulsed field with a duty cycle of an on-time between 0.1 and 10 microseconds and an off-time between 10 and 80 microseconds; or
wherein the microwave electromagnetic field is provided as a pulsed field with a duty cycle of an on-time between 0.1 and 1 microseconds and an off-time between 20 and 80 microseconds.

7. A method according to any preceding claim, further comprising the step of thermostatically controlling the exposure of the liquid to the microwave electromagnetic field, and thereby preventing the liquid from being heated above a predetermined temperature;
wherein said predetermined temperature is less than 60°C, or less than 50°C, less than 40°C, or less than 30°C.

8. A method according to any preceding claim, wherein the liquid is exposed to said microwave electromagnetic field in a batch operation; and/or
wherein the liquid is exposed to said microwave electromagnetic field in a continuous flow mode of operation wherein the liquid flows through said cavity at a volumetric rate that provides a predetermined level or range of exposure to said microwave electromagnetic field.

9. A method according to any preceding claim, wherein said liquid is an aqueous liquid, or milk or a derivative thereof.

10. A method according to any preceding claim, wherein said further industrial processing step comprises heating said liquid to a temperature higher than the maximum temperature reached during the exposure of the liquid to said microwave electromagnetic field.

11. A method according to claim 10, wherein said further industrial processing step comprises passing said liquid through a heat exchanger to perform said heating of said liquid; and/or
wherein said further industrial processing step heats said liquid to a temperature of greater than 70°C, and the maximum temperature reached during exposure of the liquid to said microwave electromagnetic field is no greater than 60°C, more preferably 50°C, more preferably 40°C, more preferably 30°C.

12. A method according to claim 10 or claim 11, wherein said heating step is performed within a time of 30 minutes after exposure to said microwave electromagnetic field, more preferably 20 minutes, more preferably 10 minutes.

13. A method according to any preceding claim, further comprising, prior to the step of exposing the liquid within said microwave-resonance cavity to a microwave electromagnetic field: performing a molecular-dynamics simulation to determine the effect of different microwave frequencies on inter-molecular spacing between molecules of a protein found in said liquid; and determining from said simulation an effective frequency to increase said inter-molecular spacing; and wherein said step of exposing the liquid within said microwave-resonance cavity to a microwave electromagnetic field employs a microwave electromagnetic field having a frequency determined to be effective in said simulation.

14. A method according to claim 13, wherein said step of determining an effective frequency identifies a frequency or range of frequencies for which said inter-molecular spacing is increased beyond a minimum level relative to a zero-field equilibrium spacing for said protein.

15. An assembly of an industrial processing plant comprising:
a plurality of liquid processing systems connected in a sequence by conduits, wherein one of said liquid processing systems comprises a microwave-resonance cavity having a source of microwaves communicating therewith, and said microwave-resonance cavity having an inlet conduit and an outlet conduit, with at least one other of said liquid processing systems being connected to said outlet conduit;
flow-control means for controlling the flow of a protein-containing liquid via said inlet conduit into said microwave resonance cavity;
a microwave controller for controlling the exposure of liquid within said microwave-resonance cavity to a microwave electromagnetic field provided by said microwave source and thereby reducing the tendency of proteins within the liquid to agglomerate, wherein the controller is configured to provide a microwave electromagnetic field with an average field strength of between 0.1 kV/m and 20 kV/m and a frequency of between 0.1 and 30 GHz;
flow-control means for controlling the flow of the liquid, following exposure to said microwave electromagnetic field, via said outlet conduit to said at least one other of said liquid processing systems; and
a process-controller operative to perform a further industrial processing step on said liquid in said at least one other of said liquid processing systems within a time of one hour after exposure to said microwave electromagnetic field.

## Patentansprüche

1. Verfahren zum Hemmen der Proteinagglomeration in einer proteinhaltigen Flüssigkeit, das in einer industriellen Verarbeitungsanlage durchgeführt wird, wobei das Verfahren Folgendes umfasst:
Bereitstellen einer industriellen Verarbeitungsanlage, die eine Vielzahl von Flüssigkeitsverarbeitungssystemen umfasst, die in einer Abfolge durch Leitungen verbunden ist, wobei eines der Flüssigkeitsverarbeitungssysteme einen Mikrowellenresonanzhohlraum umfasst, der eine mit diesem kommunizierende Quelle von Mikrowellen aufweist, und der Mikrowellenresonanzhohlraum eine Einlassleitung und eine Auslassleitung aufweist, wobei mindestens ein anderes der Flüssigkeitsverarbeitungssysteme mit der Auslassleitung verbunden ist;
Transportieren einer proteinhaltigen Flüssigkeit über die Einlassleitung in den Mikrowellenresonanzhohlraum;
Aussetzen der Flüssigkeit innerhalb des Mikrowellenresonanzhohlraums gegenüber einem durch die Mikrowellenquelle bereitgestellten elektromagnetischen Mikrowellenfeld und dadurch Reduzieren der Agglomerationsneigung von Proteinen in der Flüssigkeit, wobei das elektromagnetische Mikrowellenfeld eine mittlere Feldstärke zwischen 0,1 kV/m und 20 kV/m aufweist und wobei das elektromagnetische Mikrowellenfeld eine Frequenz zwischen 0,1 und 30 GHz aufweist;
Transportieren der Flüssigkeit nach dem Aussetzen gegenüber dem elektromagnetischen Mikrowellenfeld über die Auslassleitung zu dem mindestens einen anderen der Flüssigkeitsverarbeitungssysteme; und
Durchführen eines weiteren industriellen Verarbeitungsschritts an der Flüssigkeit in dem mindestens einen anderen der Flüssigkeitsverarbeitungssysteme innerhalb einer Zeit von einer Stunde nach dem Aussetzen gegenüber dem elektromagnetischen Mikrowellenfeld.

2. Verfahren nach Anspruch 1, wobei das elektromagnetische Mikrowellenfeld eine mittlere Feldstärke von mindestens 0,25 kV/m aufweist; oder
wobei das elektromagnetische Mikrowellenfeld eine mittlere Feldstärke von mindestens 0,4 kV/m aufweist.

3. Verfahren nach Anspruch 1 oder 2, wobei das elektromagnetische Mikrowellenfeld eine mittlere Feldstärke von nicht mehr als 10 kV/m aufweist; oder
wobei das elektromagnetische Mikrowellenfeld eine mittlere Feldstärke von nicht mehr als 5 kV/m aufweist; oder
wobei das elektromagnetische Mikrowellenfeld eine mittlere Feldstärke zwischen 0,5 kV/m und 5 kV/m aufweist.

4. Verfahren nach einem der vorhergehenden Ansprüche, wobei die Flüssigkeit dem elektromagnetischen Mikrowellenfeld für mindestens eine Minute ausgesetzt wird, während der das elektromagnetische Mikrowellenfeld als gepulstes oder kontinuierliches Feld bereitgestellt wird.

5. Verfahren nach Anspruch 4, wobei das elektromagnetische Mikrowellenfeld als gepulstes Feld mit einem Tastverhältnis von Einschaltzeit zu Ausschaltzeit von 1:800 bis 1:1 oder von 1:600 bis 1:100 bereitgestellt wird.

6. Verfahren nach Anspruch 4, wobei das elektromagnetische Mikrowellenfeld als gepulstes Feld mit einem Tastverhältnis einer Einschaltzeit zwischen 0,1 und 10 Mikrosekunden und einer Ausschaltzeit zwischen 10 und 80 Mikrosekunden bereitgestellt wird; oder
wobei das elektromagnetische Mikrowellenfeld als gepulstes Feld mit einem Tastverhältnis einer Einschaltzeit zwischen 0,1 und 1 Mikrosekunde und einer Ausschaltzeit zwischen 20 und 80 Mikrosekunden bereitgestellt wird.

7. Verfahren nach einem der vorhergehenden Ansprüche, ferner umfassend den Schritt eines thermostatischen Steuerns der Aussetzung der Flüssigkeit gegenüber dem elektromagnetischen Mikrowellenfeld, und dadurch Verhindern, dass die Flüssigkeit über eine vorbestimmte Temperatur erwärmt wird;
wobei die vorbestimmte Temperatur weniger als 60 °C oder weniger als 50 °C, weniger als 40 °C oder weniger als 30 °C beträgt.

8. Verfahren nach einem der vorhergehenden Ansprüche, wobei die Flüssigkeit dem elektromagnetischen Mikrowellenfeld in einem Batchbetrieb ausgesetzt wird; und/oder
wobei die Flüssigkeit dem elektromagnetischen Mikrowellenfeld in einem kontinuierlichen Strömungsmodus ausgesetzt ist, wobei die Flüssigkeit den Hohlraum mit einer Volumenrate durchströmt, die ein vorbestimmtes Niveau oder eine vorbestimmte Spanne der Aussetzung gegenüber dem elektromagnetischen Mikrowellenfeld bereitstellt.

9. Verfahren nach einem der vorhergehenden Ansprüche, wobei die Flüssigkeit eine wässrige Flüssigkeit oder Milch oder ein Derivat davon ist.

10. Verfahren nach einem der vorhergehenden Ansprüche, wobei der weitere industrielle Verarbeitungsschritt Erwärmen der Flüssigkeit auf eine Temperatur umfasst, die höher ist als die maximale Temperatur, die während der Aussetzung der Flüssigkeit gegenüber dem elektromagnetischen Mikrowellenfeld erreicht wird.

11. Verfahren nach Anspruch 10, wobei der weitere industrielle Verarbeitungsschritt Leiten der Flüssigkeit durch einen Wärmetauscher umfasst, um die Erwärmung der Flüssigkeit durchzuführen; und/oder
wobei der weitere industrielle Verarbeitungsschritt die Flüssigkeit auf eine Temperatur von mehr als 70 °C erwärmt und die maximale Temperatur, die während der Aussetzung der Flüssigkeit gegenüber dem elektromagnetischen Mikrowellenfeld erreicht wird, nicht mehr als 60 °C, insbesondere 50 °C, insbesondere 40 °C, insbesondere 30 °C beträgt.

12. Verfahren nach Anspruch 10 oder Anspruch 11, wobei der Erwärmungsschritt innerhalb einer Zeit von 30 Minuten, insbesondere 20 Minuten, insbesondere 10 Minuten, nach dem Aussetzen gegenüber dem elektromagnetischen Mikrowellenfeld durchgeführt wird.

13. Verfahren nach einem der vorhergehenden Ansprüche, ferner umfassend, vor dem Schritt des Aussetzens der Flüssigkeit innerhalb des Mikrowellenresonanzhohlraums gegenüber einem elektromagnetischen Mikrowellenfeld: Durchführen einer molekulardynamischen Simulation, um die Wirkung von unterschiedlichen Mikrowellenfrequenzen auf den intermolekularen Abstand zwischen Molekülen eines in der Flüssigkeit vorliegenden Proteins zu bestimmen; und Bestimmen einer effektiven Frequenz aus der Simulation, um den intermolekularen Abstand zu erhöhen; und wobei der Schritt des Aussetzens der Flüssigkeit innerhalb des Mikrowellenresonanzhohlraums gegenüber einem elektromagnetischen Mikrowellenfeld ein elektromagnetisches Mikrowellenfeld mit einer Frequenz einsetzt, für die bestimmt wurde, dass sie in der Simulation wirksam ist.

14. Verfahren nach Anspruch 13, wobei der Schritt des Bestimmens einer effektiven Frequenz eine Frequenz oder eine Spanne von Frequenzen identifiziert, für die der intermolekulare Abstand bezogen auf einen Nullfeld-Gleichgewichtsabstand für das Protein über ein minimales Niveau hinaus erhöht ist.

15. Baugruppe einer industriellen Verarbeitungsanlage, umfassend:
eine Vielzahl von Flüssigkeitsverarbeitungssystemen, die in einer Abfolge durch Leitungen verbunden ist, wobei eines der Flüssigkeitsverarbeitungssysteme einen Mikrowellenresonanzhohlraum umfasst, der eine mit diesem kommunizierende Quelle von Mikrowellen aufweist, und der Mikrowellenresonanzhohlraum eine Einlassleitung und eine Auslassleitung aufweist, wobei mindestens ein anderes der Flüssigkeitsverarbeitungssysteme mit der Auslassleitung verbunden ist;
eine Strömungssteuereinrichtung zum Steuern der Strömung einer proteinhaltigen Flüssigkeit über die Einlassleitung in den Mikrowellenresonanzhohlraum;
eine Mikrowellensteuerung zum Steuern der Aussetzung der Flüssigkeit innerhalb des Mikrowellenresonanzhohlraums gegenüber einem durch die Mikrowellenquelle bereitgestellten elektromagnetischen Mikrowellenfeld und dadurch Reduzieren der Agglomerationsneigung von Proteinen in der Flüssigkeit, wobei die Steuerung dazu konfiguriert ist, ein elektromagnetisches Mikrowellenfeld mit einer mittleren Feldstärke zwischen 0,1 kV/m und 20 kV/m und einer Frequenz zwischen 0,1 und 30 GHz bereitzustellen;
eine Strömungssteuereinrichtung zum Steuern der Strömung der Flüssigkeit nach dem Aussetzen gegenüber dem elektromagnetischen Mikrowellenfeld über die Auslassleitung zu dem mindestens einen anderen der Flüssigkeitsverarbeitungssysteme; und
eine Prozesssteuerung, die dazu dient, einen weiteren industriellen Verarbeitungsschritts an der Flüssigkeit in dem mindestens einen anderen der Flüssigkeitsverarbeitungssysteme innerhalb einer Zeit von einer Stunde nach dem Aussetzen gegenüber dem elektromagnetischen Mikrowellenfeld durchzuführen.

## Revendications

1. Procédé d'inhibition de l'agglomération de protéines dans un liquide contenant des protéines, mis en œuvre dans une installation de traitement industriel, le procédé comprenant :
la fourniture d'une installation de traitement industriel comprenant une pluralité de systèmes de traitement de liquide reliés en séquence par des conduits, dans lequel l'un desdits systèmes de traitement de liquide comprend une cavité de résonance à micro-ondes ayant une source de micro-ondes communiquant avec elle, et ladite cavité de résonance à micro-ondes ayant un conduit d'entrée et un conduit de sortie, au moins un autre desdits systèmes de traitement de liquide étant relié audit conduit de sortie ;
le transport d'un liquide contenant des protéines via ledit conduit d'entrée dans ladite cavité de résonance à micro-ondes ;
l'exposition du liquide à l'intérieur de ladite cavité de résonance à micro-ondes à un champ électromagnétique micro-onde fourni par ladite source de micro-ondes et ainsi la réduction de la tendance des protéines à l'intérieur du liquide à s'agglomérer, dans lequel le champ électromagnétique micro-onde a une intensité de champ moyenne comprise entre 0,1 kV/m et 20 kV/m, et le champ électromagnétique micro-onde a une fréquence comprise entre 0,1 et 30 GHz ;
le transport du liquide, après l'exposition audit champ électromagnétique micro-onde, via ledit conduit de sortie vers ledit au moins un autre desdits systèmes de traitement de liquide ; et
la réalisation d'une étape de traitement industriel supplémentaire sur ledit liquide dans ledit au moins un autre desdits systèmes de traitement de liquide dans un délai d'une heure après l'exposition audit champ électromagnétique micro-onde.

2. Procédé selon la revendication 1, dans lequel ledit champ électromagnétique micro-onde a une intensité de champ moyenne d'au moins 0,25 kV/m ; ou
dans lequel ledit champ électromagnétique micro-onde a une intensité de champ moyenne d'au moins 0,4 kV/m.

3. Procédé selon la revendication 1 ou la revendication 2, dans lequel ledit champ électromagnétique micro-onde a une intensité de champ moyenne ne dépassant pas 10 kV/m ; ou
dans lequel ledit champ électromagnétique micro-onde a une intensité de champ moyenne ne dépassant pas 5 kV/m ; ou
dans lequel ledit champ électromagnétique micro-onde a une intensité de champ moyenne comprise entre 0,5 kV/m et 5 kV/m.

4. Procédé selon une quelconque revendication précédente, dans lequel le liquide est exposé au champ électromagnétique micro-onde pendant au moins une minute, pendant laquelle le champ électromagnétique micro-onde est fourni sous la forme d'un champ pulsé ou continu.

5. Procédé selon la revendication 4, dans lequel le champ électromagnétique micro-onde est fourni sous la forme d'un champ pulsé, avec un rapport de cycle de service du temps de marche au temps d'arrêt de 1:800 à 1:1 ou de 1:600 à 1:100.

6. Procédé selon la revendication 4, dans lequel le champ électromagnétique micro-onde est fourni sous la forme d'un champ pulsé avec un cycle de service d'un temps de marche compris entre 0,1 et 10 microsecondes et d'un temps d'arrêt compris entre 10 et 80 microsecondes ; ou
dans lequel le champ électromagnétique micro-onde est fourni sous la forme d'un champ pulsé avec un cycle de service d'un temps de marche compris entre 0,1 et 1 microseconde et d'un temps d'arrêt compris entre 20 et 80 microsecondes.

7. Procédé selon une quelconque revendication précédente, comprenant également l'étape de commande thermostatique de l'exposition du liquide au champ électromagnétique micro-onde, et ainsi le fait d'empêcher le liquide d'être chauffé au-dessus d'une température prédéterminée ;
dans lequel ladite température prédéterminée est inférieure à 60 °C, ou inférieure à 50 °C, inférieure à 40 °C ou inférieure à 30 °C.

8. Procédé selon une quelconque revendication précédente, dans lequel le liquide est exposé audit champ électromagnétique micro-onde dans une opération discontinue ; et/ou
dans lequel le liquide est exposé audit champ électromagnétique micro-onde dans un mode de fonctionnement à écoulement continu dans lequel le liquide s'écoule à travers ladite cavité à un débit volumétrique qui fournit un niveau ou une plage d'exposition prédéterminé audit champ électromagnétique micro-onde.

9. Procédé selon une quelconque revendication précédente, dans lequel ledit liquide est un liquide aqueux, ou du lait ou un dérivé de celui-ci.

10. Procédé selon une quelconque revendication précédente, dans lequel ladite étape de traitement industriel supplémentaire comprend le chauffage dudit liquide à une température supérieure à la température maximale atteinte lors de l'exposition du liquide audit champ électromagnétique micro-onde.

11. Procédé selon la revendication 10, dans lequel ladite étape de traitement industriel supplémentaire comprend le passage dudit liquide à travers un échangeur de chaleur pour effectuer ledit chauffage dudit liquide ; et/ou
dans lequel ladite étape de traitement industriel supplémentaire chauffe ledit liquide à une température supérieure à 70 °C, et la température maximale atteinte pendant l'exposition du liquide audit champ électromagnétique micro-onde n'est pas supérieure à 60 °C, plus préférablement à 50 °C, plus préférablement à 40 °C, plus préférablement à 30 °C.

12. Procédé selon la revendication 10 ou la revendication 11, dans lequel ladite étape de chauffage est effectuée dans un délai de 30 minutes après l'exposition audit champ électromagnétique micro-onde, plus préférablement 20 minutes, plus préférablement 10 minutes.

13. Procédé selon une quelconque revendication précédente, comprenant également, avant l'étape d'exposition du liquide à l'intérieur de ladite cavité de résonance à micro-ondes à un champ électromagnétique micro-onde : la réalisation d'une simulation de dynamique moléculaire pour déterminer l'effet de différentes fréquences micro-ondes sur l'espacement intermoléculaire entre des molécules d'une protéine trouvée dans ledit liquide ; et la détermination à partir de ladite simulation d'une fréquence efficace pour augmenter ledit espacement intermoléculaire ; et dans lequel ladite étape d'exposition du liquide à l'intérieur de ladite cavité de résonance à micro-ondes à un champ électromagnétique micro-onde utilise un champ électromagnétique micro-onde ayant une fréquence déterminée comme étant efficace dans ladite simulation.

14. Procédé selon la revendication 13, dans lequel ladite étape de détermination d'une fréquence efficace identifie une fréquence ou une plage de fréquences pour laquelle ledit espacement intermoléculaire est augmenté au-delà d'un niveau minimum par rapport à un espacement d'équilibre en champ nul pour ladite protéine.

15. Ensemble d'une installation de traitement industriel comprenant :
une pluralité de systèmes de traitement de liquide reliés en séquence par des conduits, dans lequel l'un desdits systèmes de traitement de liquide comprend une cavité de résonance à micro-ondes ayant une source de micro-ondes communiquant avec elle, et ladite cavité de résonance à micro-ondes ayant un conduit d'entrée et un conduit de sortie, au moins un autre desdits systèmes de traitement de liquide étant relié audit conduit de sortie ;
un moyen de commande d'écoulement pour commander l'écoulement d'un liquide contenant des protéines via ledit conduit d'entrée dans ladite cavité de résonance micro-ondes ;
un dispositif de commande à micro-ondes pour commander l'exposition du liquide à l'intérieur de ladite cavité de résonance à micro-ondes à un champ électromagnétique micro-onde fourni par ladite source à micro-ondes et pour ainsi réduire la tendance des protéines à l'intérieur du liquide à s'agglomérer, dans lequel le dispositif de commande est configuré pour fournir un champ électromagnétique micro-onde avec une intensité de champ moyenne comprise entre 0,1 kV/m et 20 kV/m et une fréquence comprise entre 0,1 et 30 GHz ;
un moyen de commande d'écoulement pour commander l'écoulement du liquide, après l'exposition audit champ électromagnétique micro-onde, via ledit conduit de sortie vers ledit au moins un autre desdits systèmes de traitement de liquide ; et
un dispositif de commande de processus opérationnel pour réaliser une étape de traitement industriel supplémentaire sur ledit liquide dans ledit au moins un autre desdits systèmes de traitement de liquide dans un délai d'une heure après l'exposition audit champ électromagnétique micro-onde.
